# EUROPÄISCHE PATENTSCHRIFT

(11) **EP 1 276 980 B1**
(45) Veröffentlichungstag und Bekanntmachung des Hinweises auf die Patenterteilung: **16.05.2007**
(21) Anmeldenummer: 01921203.4
(22) Anmeldetag: 15.03.2001
(51) Int. Cl.: F02D 13/02

(54) **VERFAHREN ZUR FÜLLUNGSSTEUERUNG BEI EINEM VERBRENNUNGSMOTOR**
CYLINDER-CHARGE CONTROL METHOD IN AN INTERNAL COMBUSTION ENGINE
PROCEDE POUR COMMANDER LE REMPLISSAGE DES CYLINDRES DANS UN MOTEUR A COMBUSTION INTERNE

(30) Priorität: 13.04.2000 DE 10018303
(43) Veröffentlichungstag der Anmeldung: 22.01.2003
(73) Patentinhaber: ROBERT BOSCH GMBH, 70442 Stuttgart (DE)
(72) Erfinder: GAESSLER, Hermann, 71665 Vaihingen (DE); DIEHL, Udo, 70195 Stuttgart (DE); MISCHKER, Karsten, 71229 Leonberg (DE); WALTER, Rainer, 74385 Pleidelsheim (DE); ROSENAU, Bernd, 71732 Tamm (DE); SCHIEMANN, Juergen, 71706 Markgroeningen (DE); GROSSE, Christian, 70806 Kornwestheim (DE); BEUCHE, Volker, 70372 Stuttgart (DE); REIMER, Stefan, 71706 Markgroeningen (DE)
(86) Internationale Anmeldenummer: PCT/DE2001/000989
(87) Internationale Veröffentlichungsnummer: WO 2001/079675

(56) Entgegenhaltungen:
- EP-A- 0 397 359
- EP-A- 0 473 258
- EP-A- 0 594 463
- DE-A- 4 308 931
- JP-A- 2000 087 768
- US-A- 5 367 990
- GÖBEL: "GEMISCHBILDUNG BEI DROSSELFREIER lASTSTEUERUNG VON OTTOMOTOREN" MOTORTECHNISCHE ZEITSCHRIFT, Bd. 54, Nr. 12, 1. Dezember 1993 (1993-12-01), Seiten 616-622, XP000413581 STUTTGART

## Beschreibung

### Stand der Technik

Die vorliegende Erfindung betrifft ein Verfahren zur Füllungssteuerung bei einem Verbrennungsmotor mit variabler Steuerung der Gaswechselventile seiner Zylinder, wobei durch Steuerung der Schließzeitpunkte des mindestens einen Auslassventils des jeweiligen Zylinders und durch Öffnen mindestens eines Einlassventils im Bereich des oberen Totpunktes eine interne Restgasrückführung im Zylinder mit zeitweiligem Ausschieben von Restgas vor das mindestens eine Einlassventil veranlasst wird.

Aus der EP 0 473 258 A2 ist bereits ein Verfahren bekannt, bei dem zur Reduzierung der Pumparbeit der Brennkraftmaschine eine erste und zweite Öffnungsphase eines Einlassventils vorgesehen sind. Hierbei beginnt die erste Öffnungsphase, wenn das Auslassventil am oberen Totpunkt schließt. Sie endet vor Erreichen des unteren Totpunkts. Nach Erreichen des unteren Totpunkts, bei dem die Druckdifferenz zwischen Einlasskanal und Brennraum maximal ist, wird das Einlassventil erneut geöffnet, so dass das Kraftstoff-Luftgemisch in turbulenter Strömung in den Brennraum gelangt.

Geeignete Verfahren zur Auslasssteuerung sind das frühe Schließen aller Auslassventile eines Zylinders bevor der Kolben im Zylinder seinen oberen Totpunkt erreicht oder das späte Schließen mindestens eines Auslassventils eines Zylinders erst nach dem Öffnen mindestens eines Einlassventils des Zylinders. Im zweiten Fall einer so genannten Ventilüberschneidung wird ein Druckgefälle von der Auslassseite zur Einlassseite zum Zwecke der internen Restgasrückführung ausgenutzt, wobei dieses Gefälle gegebenenfalls durch den Einsatz einer Drosselklappe im Saugrohr bewirkt oder verstärkt wird.

In MTZ Motortechnische Zeitschrift 60 (1999) 7/80, Seite 476 - 485 ist eine drosselfreie Laststeuerung mit vollvariablen Ventiltrieben für einen Ottomotor beschrieben. Bei Motoren mit variabler Ventilsteuerung erfolgt die Steuerung der Füllung bzw. der Leistung ganz oder teilweise durch die Steuerung des Öffnungsverlaufs der Gaswechselventile (Ein- und Auslaßventile der Zylinder). Eine Drosselklappe im Saugrohr kann zusätzlich vorhanden sein, es kann aber auch auf sie völlig verzichtet werden.

Als Variablen, d. h. durch eine Ventilsteuerung einstellbare Parameter, des Öffnungsverlaufs eines Ventils kommen in Frage:
1. Beginn und Ende der Ventilöffnung. Man spricht hier auch von Steuerzeiten für die Ventilöffnung. Die Steuerzeiten werden üblicherweise durch die Winkelstellung der Kurbelwelle gegenüber einer - gegebenenfalls zylinderspezifischen - Referenzposition charakterisiert. Wichtig ist dabei der Phasenbezug zum Arbeitsspiel des betreffenden Zylinders, z. B. die Lage im Kompressions-, Verbrennungs-, Ausschiebe- oder Ansaugtakt.
2. Der Hub des Ventils.
3. Die mittlere oder maximale Geschwindigkeit des Ventils beim Öffnen bzw. Schließen. Man spricht hier auch von der Flankensteilheit des Ventilhubverlaufs.

Bei einem Motor mit vollvariablen Ventiltrieben, wie in der MTZ 60 (1999) 7/8 Seite 479 - 485 beschrieben, können die Gaswechselventile direkt angesteuert und betätigt werden, z.B. durch elektromagnetische oder elektrohydraulische Ventilsteller. Insbesondere kann dabei die Füllung der Zylinder allein durch die geeignete Steuerung der Ventile dosiert werden, wobei der Einsatz einer Drosselklappe entfällt. Durch die Verringerung der Drosselverluste, d.h. der Pumparbeit des Motors wird der motorische Wirkungsgrad erhöht und somit der spezifische Verbrauch verringert. Ein Problem derart entdrosselter Motoren liegt in den erschwerten Bedingungen für die äußere Gemischbildung im Saugrohr. Bei einem Drosselklappen-geregelten Motor liegt, außer bei Vollast, ein Unterdruck im Saugrohr vor, der eine gute Verdampfung des in der Regel in der Nähe der Einlaßventile eingespritzten Kraftstoffs ermöglicht. Bei einem entdrosselten Motor herrscht demgegenüber praktisch Umgebungsdruck im Saugrohr vor, wodurch die Verdampfungsrate deutlich verringert und der flüssige Kraftstoffanteil (Wandfilm) entsprechend erhöht wird. Besonders gravierend wirkt sich dies bei kaltem Motor, d.h. beim Kaltstart und während der anschließenden Warmlaufphase, aus. So erweist sich z.B. die bei warmen Motor im Teillastbetrieb vorteilhafte Steuerstrategie des "frühen Einlaß - Schließens" (vergleiche MTZ 60 (1999) 7/8) bei kaltem Motor als Nachteil, weil Kraftstoff teilweise in flüssiger Form in den Brennraum eingesaugt und bis zur Zündung nicht mehr genügend aufbereitet, d.h. verdampft und mit der Luft homogenisiert wird. Durch das frühe Schließen der Einlaßventile kann zudem, in Folge der Abkühlung der Zylinder-Ladung bei der nachfolgenden Expansion, im Bereich des unteren Totpunktes des Kolbens bereits verdampfter Kraftstoff kondensieren. Entsprechend schlecht sind unter diesen Bedingungen die Verbrennungsqualität, die Laufruhe, der Kraftstoffverbrauch und der Schadstoffgehalt des Abgases. Bei einer solchen auf möglichst geringen Drosselverlust optimierten Steuerung der Einlaßventile werden diese in der Nähe des oberen Totpunktes des Kolbens geöffnet und bei Teillast früh, d.h. vor dem unterem Totpunkt, geschlossen.

Zur Verbesserung der Gemischbildung und Gemischaufbereitung bei einem drosselfreiem Ottomotor sind - im Bezug auf die verwendete Steuerungsstrategie für die Gaswechselventile - aus dem Stand der Technik folgende zwei Maßnahmen bekannt:
1. Eine Einlaß- geführte Restgasrückführung, wobei über die Einlaßventile Restgas ausgeschoben und wieder angesaugt wird. Diese interne Restgasrückführung ist z.B. bekannt aus M. Pischinger, J. Hagen, W. Salber, T. Esch: Möglichkeiten der ottomotorischen Prozessführung bei Verwendung des elektromechanischen Ventiltriebs, 7. Aachener Kolloquium Fahrzeug- und Motorentechnik, 1998, S. 987-1015.
2. Spätes Öffnen der Einlaßventile, wie aus der zuvor genannten Druckschrift bekannt.

Die beiden genannten, aus dem Stand der Technik bekannten Verfahren bewirken eine Verringerung der Schadstoffanteile des Rohabgases im Warmlauf des Motors. Das Verfahren der internen Restgasrückführung erzielt diese Wirkung darüberhinaus auch bei betriebswarmem Motor. Die Verringerung der Schadstoffanteile des Rohabgases im Warmlauf ist von großer Bedeutung insbesondere für die frühe Phase des Warmlaufs, in der die Anspringtemperatur des Katalysators noch nicht erreicht und somit eine Filterung bzw. Konvertierung der Schadstoffe durch den Katalysator nur in sehr geringem Maße möglich ist.

Mit der Strategie des späten Öffnens der Einlaßventile wird durch Expansion des Zylindervolumens nach dem Ladungswechsel im oberen Totpunkt ein Unterdruck im Zylinder erzeugt. Einlaßventile werden erst dann geöffnet, wenn der Druck im Zylinder genügend klein ist bzw. dann, wenn ein überkritisches Druckverhältnis zwischen Zylinder und Saugrohr (< ca. 0,5) erreicht ist. Daraus resultiert eine hohe Einströmgeschwindigkeit (maximal Schallgeschwindigkeit) des Frischgases in den jeweiligen Zylinder. Dieser hochdynamische, turbulente Einströmvorgang bewirkt eine Verbesserung der Gemischaufbereitung, nämlich dadurch, daß flüssige Kraftstoffanteile besser zerstäubt und anschließend weitgehend vollständig verdampft werden. Darüberhinaus entsteht eine verbesserte Homogenisierung der Gaskomponenten Luft, Kraftstoffdampf und Restgas. Auf diese Weise läßt sich eine deutliche Verbesserung von Schadstoff-Anteilen im Rohabgas, insbesondere von unverbrannten Kohlenwasserstoffen (HC) erzielen. Zudem vermag die verbesserte Verbrennung - neben der guten Gemischaufbereitung wirkt sich hier auch die erhöhte Turbulenz der Zylinderladung positiv aus - die erhöhten Ladungswechselverluste dieses Verfahrens speziell bei kaltem Motor weitgehend zu kompensieren.

Bei der anderen erwähnten Strategie wird z.B. durch Schließen der Auslaßventile vor dem oberen Totpunkt sowie das frühe Öffnen mindestens eines Einlaßventils ebenfalls vor oder in der Nähe des oberen Totpunktes, wahlweise auch durch Anwendung einer Ventilüberschneidung, eine Vergrößerung des Anteils an heißem Restgas in der Zylinderladung herbeigeführt. Zusätzlich bewirkt das im Bereich des oberen Totpunktes vorliegende Druckgefälle zwischen Zylinder und Einlaßkanal (Saugrohr) - bei bereits geöffnetem Einlaß - das Ausströmen eines Teils dieses heißen Abgases in das Saugrohr. Dieses in dem Bereich von Einspritzventil und Kraftstoff-Wandfilm ausgeschobene Restgas bewirkt eine schnelle Aufheizung des Ansaugkrümmers nach einem Kaltstart und verbessert die Gemischbildung, d.h. die Verdampfung flüssiger Anteile des Kraftstoffes im Saugrohr. Bei weiterhin geöffnetem Einlaßventil wird das Gemisch von Restgas und Frischgas unmittelbar anschließend in den Zylinder eingesaugt. Aufgrund einer erhöhten Ladungstemperatur wird auch die weitere Aufbereitung des Gemisches im Zylinder verbessert. Diese Methode der internen Restgasrückführung bringt eine Verringerung des Kraftstoffverbrauchs sowie der Schadstoff-Anteile (insbesondere Kohlenwasserstoffe) im Rohabgas. Darüberhinaus wird in Folge der Ladungsverdünnung durch Restgas die Verbrennungstemperatur abgesenkt, wodurch wiederum Schadstoffanteile (NOx-Komponenten) des Rohabgases deutlich vermindert werden. Zudem ergeben sich Verbrauchsvorteile aus einer weiteren Absenkung der Ladungswechselarbeit. Ein erhöhter Restgasanteil kann sich andererseits auch nachteilig auf die Homogenisierung der Zylinderladung - insbesondere der Komponenten Frischgas und Restgas - auswirken. Außerdem verringert sich bei steigender Restgaskonzentration die Brenngeschwindigkeit und die Entflammungsphase wird länger. Als Folge nehmen zyklische Verbrennungsschwankungen zu, was Nachteile für Laufruhe und Verbrennungswirkungsgrad bedingt.

Der Erfindung liegt nun die Aufgabe zugrunde, ein Verfahren der eingangs genannten Art anzugeben, das insbesondere im Warmlauf einen möglichst guten Betrieb des Motors hinsichtlich des Kraftstoffverbrauchs, der Schadstoffemission und der Laufruhe gewährleistet.

### Vorteile der Erfindung

Die genannte Aufgabe wird mit den Merkmalen des Anspruchs 1 dadurch gelöst, daß innerhalb eines Ladungswechsels im Zylinder in mindestens zwei zeitlich voneinander abgesetzten Phasen mindestens ein Einlaßventil geöffnet wird. Zudem wird durch entsprechende Steuerung des mindestens einen Auslaßventils und des mindestens einen Einlaßventils eine innere Restgasrückführung über den Einlaßkanal veranlaßt.

Mit der erfindungsgemäßen Steuerung der Gaswechselventile wird neben einer Verringerung der NOx-Anteile im Rohabgas insbesondere eine verbesserte Verbrennung und Laufruhe erreicht. Nachteile für Verbrennungsstabilität und Laufruhe durch hohe Anteile rückgeführten Restgases, die bei bekannten Verfahren der Abgasrückführung aus einer schlechten Durchmischung von Frischgas und Restgas im Zylinder und einer deutlich verlangsamten Verbrennung resultieren und dort die mögliche Abgas-Rückführrate begrenzen, werden bei dem erfindungsgemäßen Verfahren durch einen hochdynamischen Ansaugvorgang nach dem zweiten späten Öffnen mindestens eines Einlassventils und die dadurch entstehende erhöhte Ladungsbewegung im Brennraum verringert bzw. vermieden. Das Verfahren nach der Erfindung ist ohne zusätzlichen Aufwand an Komponenten bei einem Motor mit vollvariabler Ventilsteuerung realisierbar.

Das erfindungsgemäße Verfahren kann nicht nur bei einem Ottomotor mit Saugrohreinspritzung (äußere Gemischbildung), sondern auch bei Motoren mit innerer Gemischbildung - direkteinspritzender Ottomotor, Dieselmotor - angewendet werden.

Vorteilhafte Weiterbildungen der Erfindung gehen aus den Unteransprüchen hervor.

Danach wird vorzugsweise in zwei zeitlich voneinander abgesetzten Phasen mindestens ein Einlassventil geöffnet, wobei die erste Phase des Einlassventil-Öffnens im Bereich des oberen Totpunktes und die zweite Phase des Einlassventil-Öffnens nach dem oberen Totpunkt beginnt. Die Auslassventile können vorzugsweise bei Anwendung einer Ventilüberschneidung vor dem Ende der ersten Phase des Einlaßventil-Öffnens geschlossen werden.

Vorteilhafterweise wird der Beginn der zweiten Phase des Einlaßventil-Öffnens nach dem Ende der ersten Phase so gewählt, daß sich im Zylinder ein so großer Unterdruck aufbaut, daß sich eine gewünschte hohe Einströmgeschwindigkeit für das Gasgemisch in den Zylinder einstellt.

Bei einem 6-Takt oder 8-Takt Betrieb des Motors wird die zweite Phase des Einlaßventil-Öffnens vorteilhaft um mindestens ca. eine Kurbelwellenumdrehung versetzt nach der ersten Phase des Einlaßventil-Öffnens begonnen. D.h. es verbleibt die nach dem Ausschieben des Restgases in den Bereich vor die Einlaßventile rückgeführte Restgasmenge während der Dauer mindestens einer Kolbenumdrehung im Saugrohr. In diesem Fall erstreckt sich die Ladungswechselphase über mehr als zwei Takte, wobei die mindestens zwei voneinander abgesetzten Einlaßventil-Öffnungs-Phasen zeitlich besonders weit auseinander liegen.

Es ist vorteilhaft, daß alle Einlaß- und Auslaßventile individuell bezüglich des Hubes, der Flankensteilheit, des Öffnungsverlaufs und der Öffnungszeit steuerbar sind.

Weiterhin ist es vorteilhaft, daß der Beginn und das Ende der Öffnungsphasen und/oder die Hübe und/oder die Flankensteilheiten der Öffnungsverläufe für die Einlaß- und Auslaßventile so gewählt werden, daß nach dem Ende des Ladungswechselvorgangs im Zylinder die jeweils gewünschten Mengen von Frischgas und Restgas vorhanden sind und eine Brennrauminnenströmung sowie die Turbulenz der Zylinderladung mit einer gewünschten Form und Stärke vorliegen.

Außerdem können der Beginn und das Ende der Öffnungsphasen und/oder die Hübe und/oder die Flankensteilheiten der Öffnungsverläufe für die Einlaß- und Auslaßventile nach den Kriterien einer optimalen Gemischbildungs- und Abgasqualität, eines geringst möglichen Energieaufwandes für das Stellen der Ventile und für das Hinausschieben und Wiederansaugen von Restgas und eines geringst möglichen Kraftstoffverbrauchs gesteuert werden.

### Zeichnung

Die Erfindung wird nachfolgend anhand eines in der Zeichnung dargestellten Ausführungsbeispiels näher beschrieben. Es zeigen:
Figur 1 einen Querschnitt durch einen Zylinder eines Ottomotors mit variabler Ventilsteuerung und
Figur 2 Ventilhubverläufe der Einlaß- und Auslaßventile des Motors.

### Beschreibung eines Ausführungsbeispiels

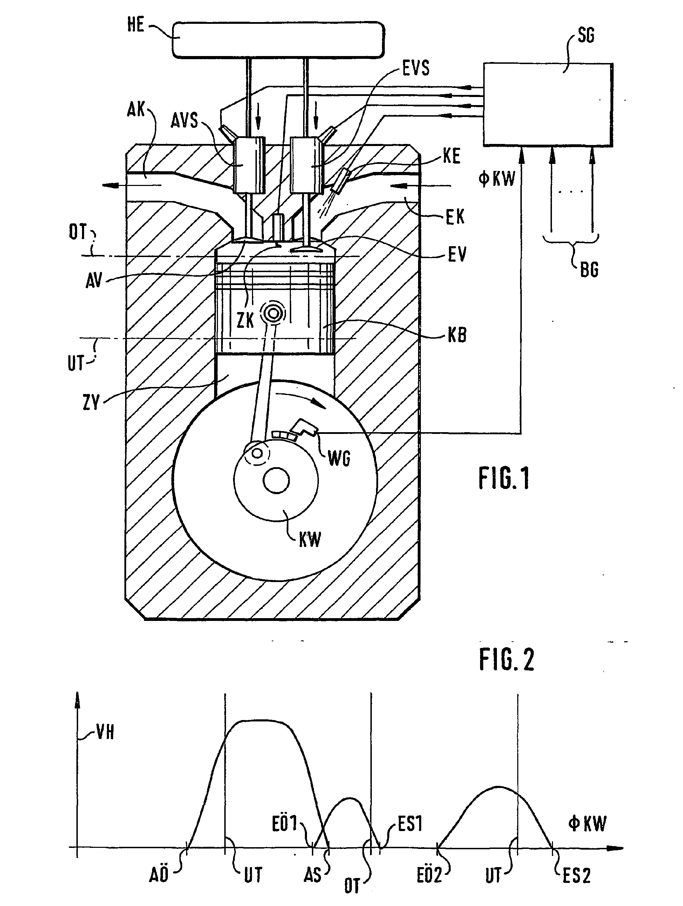

Die Figur 1 zeigt einen Querschnitt durch einen Zylinder ZY eines Ottomotors. In dem Zylinder ZY bewegt sich ein Kolben KB, z.B. nach der 4-Takt Betriebsweise, mit dem bekannten Arbeitsspiel, bestehend aus dem Ansaugtakt, dem Verdichtungstakt, dem Arbeitstakt und dem Austoßtakt. In der Zeichnung ist auch die Kurbelwelle KW dargestellt, welche der Kolben durch seine Auf- und Abbewegung in eine Drehbewegung versetzt. Die oberste Stellung, die der Kolben KB bei seiner Hubbewegung erreichen kann, wird als oberer Totpunkt bezeichnet und ist in der Figur 1 als srichlierte Linie OT gekennzeichnet. Die tiefste Stellung des Kolbenhubes ist der untere Totpunkt und ist mit einer strichlierten Linie UT gekennzeichnet. Am Kopf des Zylinders ZK befinden sich ein Einlaßkanal EK und ein Auslaßkanal AK. In den Zylinder ZY ist eine Zündkerze ZK eingesetzt, die das Kraftstoff-Luft-Gemisch im Zylinder zündet. Der Kraftstoff wird mittels eines Kraftstoff-Einspritzventils KE in den Einlaßkanal EK eingespritzt.

Der Einlaßkanal EK kann zum Zylinder ZY mittels ein oder mehrerer Einlaßventile EV geöffnet oder geschlossen werden. Desgleichen sind ein oder mehrere Auslaßventile AV vorhanden, welche den Auslaßkanal AK zum Zylinder ZY öffnen oder schließen. Die Skizze in Figur 1 zeigt jeweils nur ein Einlaßventil EV und ein Auslaßventil AV. In der Regel hat ein Motor heute aber mehrere Einlaßventile und Auslaßventile. Der Einfachheit halber wird nachfolgend immer nur von einem Einlaßventil EV und einem Auslaßventil AV gesprochen.

Der hier beschriebene Ottomotor soll eine vollvariable Ventilsteuerung besitzen. Deshalb sind die Einlaßventile EV und die Auslaßventile AV jeweils mit Motorventil-Stellern EVS und AVS versehen. Für die Motorventil-Steller EVS und AVS wird eine Hilfsenergie HE zur Verfügung gestellt, die z.B. ein elektrischer Strom oder eine elektrische Spannung ist, sofern es sich um elektromagnetische Motorventil-Steller EVS, AVS handelt. Die Hilfsenergie kann z.B. auch hydraulische oder pneumatische Energie sein, wenn die Motorventil-Steller EVS, AVS auf hydraulischer oder pneumatischer Basis arbeiten.

Ein Steuergerät SG, das in bekannter Weise einen Mikroprozessor, Programmspeicher, Datenspeicher u.s.w. enthält, liefert Steuersignale für die Zündkerze ZK, das Kraftstoff-Einspritzventil KE und für die Motorventil-Steller EVS, AVS des Einlaßventils EV und des Auslaßventils AV. Eine der Eingangsgrößen des Steuergerätes SG ist der Kurbelwinkel φKW, der von einem Geber WG für die Kurbelwellenstellung detektiert wird. In der Regel erhält das Steuergerät SG noch weitere Betriebsgrößen BG des Motors, welche Einfluß auf die Steuerung der Kraftstoffeinspritzung, der Zündung, und der Betätigung des Einlaßventils EV und des Auslaßventils AV haben. Als Betriebsgrößen BG kommen z.B. die Motordrehzahl, der Fahrerwunsch, die Motortemperatur, der Umgebungsdruck, die angesaugte Luftmasse und andere in Frage.

Die Steuergrößen für die Gaswechselventile (Einlaßventil EV, Auslaßventil AV) werden fortlaufend - z.B. Kurbelwellensynchron bzw. bezogen auf das Arbeitsspiel des Motors - im Steuergerät SG bestimmt und in entsprechende Ansteuersignale für die Motorventil-Steller EVS und AVS umgesetzt. Durch diese Signale werden das Einlaßventil EV und das Auslaßventil AV veranlaßt, einen gewünschten Ventilhubverlauf durchzuführen. Der Ventilhubverlauf ist durch die Zeitpunkte für das Öffnen und das Schließen, den Hub und auch die Flankensteilheiten charakterisiert.

Um die in der Einleitung dargelegten Vorteile einer Verringerung des NOx-Anteils im Rohabgas, eine verbesserte Verbrennung und Laufruhe insbesondere in der Warmlaufphase des Motors zu erzielen, werden das Einlaßventil EV und das Auslaßventil AV von dem Steuergerät SG so angesteuert, daß sich z. B. die in der Figur 2 dargestellten Ventilverläufe VH in Abhängigkeit vom Kurbelwellenwinkel φKW ergeben.

In dem in der Figur 2 dargestellten Ausführungsbeispiel liegt der Öffnungszeitpunkt AÖ für das Auslaßventil AV vor dem unteren Totpunkt UT, und sein Schließzeitpunkt AS liegt vor dem oberen Totpunkt OT. Das Einlassventil EV öffnet in einer ersten Phase kurz bevor das Auslassventil AV schließt. Der Öffnungszeitpunkt EÖ1 des Einlassventils EV in der ersten Öffnungsphase liegt also vor dem Schließzeitpunkt AS des Auslassventils AV. Kurz nachdem der Kolben KB den oberen Totpunkt OT verlassen hat, wird das Einlassventil EV in der ersten Öffnungsphase wieder geschlossen. Der Schließzeitpunkt ES1 liegt also nach dem oberen Totpunkt OT. Ebenfalls ist eine deutlich spätere Lage des Schließzeitpunktes AS möglich, wenn eine große Ventilüberschneidung zum Zwecke der internen Restgasrückführung angewendet wird. Die Lage der beiden beschriebenen Ventilhubverläufe für das Auslassventil AV und das Einlassventil EV bewirken eine interne Restgasrückführung in den Einlasskanal EK. Dabei verursacht das im Bereich des oberen Totpunktes vorliegende Druckgefälle zwischen dem Zylinder und dem Einlasskanal bei bereits geöffnetem Einlassventil EV das Ausströmen eines Teils des heißen Abgases in den Einlasskanal EK. Dieses in den Bereich von Einspritzventil und Kraftstoff-wandfilm im Einlasskanal ausgeschobene Restgas heizt in der Warmlaufphase des Motors das anfangs noch kalte Saugrohr auf und verbessert die Gemischbildung, d.h. es wird der flüssige Anteil des Kraftstoffs im Einlasskanal verdampft. Bei weiterhin geöffnetem Einlassventil EV wird das Gemisch von Restgas und Frischgas anschließend in den Zylinder eingesaugt.

Deutlich abgesetzt gegenüber dem Schließzeitpunkt ES1 in der ersten Öffnungsphase des Einlassventils EV erfolgt eine zweite Öffnungsphase für das Einlassventil EV, beginnend mit dem Öffnungszeitpunkt EÖ2. Der Schließzeitpunkt ES2 in der zweiten Öffnungsphase liegt nach den unteren Totpunkt UT. Während des Zeitraums zwischen dem Schließzeitpunkt ES1 der ersten Öffnungsphase und dem Öffnungszeitpunkt EÖ2 der zweiten Öffnungsphase des Einlaßventils EV entsteht durch die Bewegung des Kolbens in Richtung auf den unteren Totpunkt UT ein relativ großer Unterdruck im Zylinder gegenüber dem Druck im Einlaßkanal EK. Wenn nun in der zweiten Öffnungsphase das Einlaßventil EV geöffnet wird, entsteht aufgrund des Unterdrucks im Zylinder eine sehr hohe Einströmgeschwindigkeit, wobei maximal Schallgeschwindigkeit erreicht wird. Durch diesen Saugvorgang gelangt das in den Einlaßkanal EK eingeschobene Restgas, das zur Verdampfung der flüssigen Kraftstoffanteile an der Innenwand des Einlaßkanals EK beiträgt, zusammen mit Frischgas in den Zylinder ZY. Wegen der dadurch erhöhten Ladungstemperatur und Turbulenz wird die weitere Aufbereitung des Kraftstoff-Luftgemisches im Zylinder verbessert. Dadurch kann der Kraftstoffverbrauch vermindert und der Schadstoffgehalt (insbesondere HC) im Rohabgas verringert werden. Auch wird infolge der Ladungsverdünnung durch das Restgas die Verbrennungstemperatur abgesenkt, wodurch wiederum Schadstoffanteile (NOx-Komponenten) des Rohabgases vermindert werden.

Die aktuellen Steuergrößen, d.h. die Öffnungs- und Schließzeiten, die Hübe, und die Flankensteigungen der Ventilhubverläufe, werden zweckmäßigerweise mindestens in Abhängigkeit von der aktuell geforderten Motorleistung vorgegeben. Die Steuergrößen können aber außerdem auch von anderen Parametern abhängig gemacht werden. Solche Parameter sind z.B. die durch Sensoren erfaßten oder anderweitig bestimmten motorischen Zustandsgrößen (z.B. Kühlwassertemperatur, Motoröltemperatur etc.), die Zeit oder Zahl von Motorumdrehungen nach dem Motorstart, durch Sensoren oder anderweitig erfaßte Umweltparameter (z.B.

Ansauglufttemperatur), Reaktionen bzw. Vorgaben eines Fahrers (z.B. Gangwahl) sowie weitere Größen, die in Abhängigkeit der genannten Parameter bzw. der zeitlichen Entwicklung dieser Parameter gebildet werden.

Die Steuergrößen für die Gaswechselventile sollten in Abhängigkeit von zuvor genannten Parametern so gewählt werden, daß sich ein optimaler Motorbetrieb nach Kriterien wie Kraftstoffverbrauch, Abgasqualität, Abgastemperatur, Laufruhe oder anderen Eigenschaften ergibt.

Das zuvor beschriebene Verfahren kann auch beschränkt auf spezielle, wohl definierte Bedingungen oder Betriebszustände des Motors (z.B. im Warmlauf bis zum Erreichen einer definierten Schwelle für die Motortemperatur) verwendet werden, wobei ansonsten auf ein nach dem Stand der Technik bekanntes Verfahren zur Steuerung der Gaswechselventile zurückgegriffen wird.

## Patentansprüche

1. Verfahren zur Füllungssteuerung bei einem Verbrennungsmotor mit variabler Steuerung der Gaswechselventile (EV, AV) seiner Zylinder (ZY), wobei durch Steuerung der Schließzeitpunkte des mindestens einen Auslassventils (AV) des jeweiligen Zylinders (ZY) und durch Öffnen mindestens eines Einlassventils (EV) des jeweiligen Zylinders (ZY) im Bereich des oberen Totpunktes (OT) eine interne Restgasrückführung im Zylinder (ZY) mit zeitweiligem Ausschieben von Restgas vor das mindestens eine Einlassventil (EV) veranlasst wird, **dadurch gekennzeichnet,**
**dass** ein Öffnungszeitpunkt (EÖ1) des Einlassventils (EV) einer ersten Öffnungsphase (EÖ1, ES1) vor einem Schließzeitpunkt (AS) des Auslassventils (AV) liegt,
**dass** innerhalb eines Ladungswechsels im Zylinder (ZY) mindestens eine weitere Öffnungsphase (EÖ2, ES2) des Einlassventils (EV) erfolgt,
wobei diese weitere Öffnungsphase (EÖ2, ES2) zeitlich von der ersten Öffnungsphase (EÖ1, ES1) abgesetzt ist,
und **dass** der Beginn der weiteren Öffnungsphase (EÖ2) vor dem unteren Totpunkt (UT) liegt, und dass das Ende der weiteren Öffnungsphase (ES2) nach dem unteren Totpunkt (UT) liegt.

2. Verfahren nach Anspruch 1, **dadurch gekennzeichnet, dass** alle Auslassventile (AV) vor dem Ende (ES1) der ersten Phase des Einlassventil-Öffnens, aber vor dem oberen Totpunkt (OT) geschlossen werden.

3. Verfahren nach Anspruch 1, **dadurch gekennzeichnet, dass** der Beginn (EÖ2) der zweiten Phase des Einlassventil-Öffnens nach dem Ende (ES1) der ersten Phase so gewählt wird, dass sich im Zylinder (ZY) ein so großer Unterdruck aufbaut, dass sich eine gewünschte hohe Einströmgeschwindigkeit für das Gasgemisch in den Zylinder (ZY) einstellt.

4. Verfahren nach Anspruch 1, **dadurch gekennzeichnet, dass** bei einem 6-Takt oder 8-Takt Betrieb des Motors die zweite Phase des Einlassventil-Öffnens um mindestens ca. eine Kurbelwellenumdrehung versetzt nach der ersten Phase des Einlassventil-Öffnens beginnt.

5. Verfahren nach Anspruch 1, **dadurch gekennzeichnet, dass** alle Einlass-(EV) und Auslassventile (AV) individuell bezüglich des Hubes, der Flankensteilheit, des Öffnungsverlaufs und der Öffnungszeit steuerbar sind.

6. Verfahren nach einem der vorhergehenden Ansprüche, **dadurch gekennzeichnet, dass** der Beginn (AÖ, EÖ1, EÖ2) und das Ende (AS, ES1, ES2) der Öffnungsphasen und/oder die Hübe und/oder die Flankensteilheiten der Öffnungsverläufe für die Einlass- (EV) und Auslassventile (AV) so gewählt werden, dass nach dem Ende des Ladungswechselvorgangs im Zylinder die jeweils gewünschten Mengen von Frischgas und Restgas vorhanden sind und eine Brennrauminnenströmung sowie die Turbulenz der Zylinderladung mit einer gewünschten Form und Stärke vorliegen.

7. Verfahren nach einem der vorhergehenden Ansprüche, **dadurch gekennzeichnet, dass** der Beginn (AÖ, EÖ1, EÖ2) und das Ende (AS, ES1, ES2) der Öffnungsphasen und/oder die Hübe und/oder die Flankensteilheiten der Öffnungsverläufe für die Einlass- (EV) und Auslassventile (AV) nach den Kriterien einer optimalen Gemischbildungs- und Abgasqualität, eines geringst möglichen Energieaufwandes für das Stellen der Ventile (AV, EV) und für das Hinausschieben und Wiederansaugen von Restgas und eines geringst möglichen Kraftstoffverbrauchs gesteuert werden.

## Claims

1. Method for controlling the charge in an internal combustion engine having variable control of the gas exchange valves (EV, AV) of its cylinders (ZY), wherein an internal recirculation of residual gas in the cylinder (ZY), with residual gas being temporarily discharged upstream of the at least one inlet valve (EV), is provided by controlling the closing times of the at least one outlet valve (AV) of the respective cylinder (ZY) and by opening at least one inlet valve (EV) of the respective cylinder (ZY) in the region of top dead centre (OT), **characterized**
**in that** an opening time (EÖ1) of the inlet valve (EV) of a first opening phase (EÖ1, ES1) occurs before a closing time (AS) of the outlet valve (AV),
**in that** at least one further opening phase (EÖ2, ES2) of the inlet valve (EV) takes place within a charge cycle in the cylinder (ZY),
said further opening phase (EÖ2, ES2) being offset in terms of time from the first opening phase (EÖ1, ES1),
and **in that** the beginning of the further opening phase (EÖ2) occurs before bottom dead centre (UT), and in that the end of the further opening phase (ES2) occurs after bottom dead centre (UT).

2. Method according to Claim 1, **characterized in that** all the outlet valves (AV) are closed before the end (ES1) of the first phase of inlet valve opening but before top dead centre (OT).

3. Method according to Claim 1, **characterized in that** the beginning (EÖ2) of the second phase of inlet valve opening after the end (ES1) of the first phase is selected such that an underpressure of such a magnitude builds up in the cylinder (ZY) that a desired high inflow speed for the gas mixture into the cylinder (ZY) is generated.

4. Method according to Claim 1, **characterized in that** in the case of 6-stroke or 8-stroke operation of the engine, the second phase of inlet valve opening begins offset approximately one crankshaft rotation after the first phase of inlet valve opening.

5. Method according to Claim 1, **characterized in that** all the inlet valves (EV) and outlet valves (AV) can be controlled individually in terms of the degree of lift, the edge gradient, the opening profile and the opening time.

6. Method according to one of the preceding claims, **characterized in that** the beginning (AÖ, EÖ1, EÖ2) and the end (AS, ES1, ES2) of the opening phases and/or the degrees of lift and/or the edge gradients of the opening profiles for the inlet valves (EV) and outlet valves (AV) are selected such that, after the end of the charge cycle process, the respectively desired quantities of fresh gas and residual gas are present in the cylinder, and a combustion chamber internal flow and the turbulence of the cylinder charge are generated with the desired shape and intensity.

7. Method according to one of the preceding claims, **characterized in that** the beginning (AÖ, EÖ1, EÖ2) and the end (AS, ES1, ES2) of the opening phases and/or the degrees of lift and/or the edge gradients of the opening profiles for the inlet valves (EV) and outlet valves (AV) are controlled according to the criteria for optimum mixture formation and exhaust gas quality, for the lowest possible expenditure of energy in adjusting the valves (AV, EV) and in the discharge and renewed intake of residual gas, and for the lowest possible fuel consumption.

## Revendications

1. Procédé de commande de remplissage dans un moteur à combustion interne ayant une commande variable des soupapes d'échange de gaz (EV, AV) de ses cylindres (ZY), selon lequel un retour de gaz résiduel interne dans le cylindre (ZY) est provoqué avec l'évacuation temporaire de gaz résiduel devant la au moins une soupape d'admission (EV) par la commande des instants de fermeture de la soupape d'échappement (AV) du cylindre respectif (ZY) et par l'ouverture au moins d'une soupape d'admission (EV) du cylindre respectif (ZY) dans la zone du point mort supérieur (OT),
**caractérisé en ce qu'**
un instant d'ouverture (EÖ1) de la soupape d'admission (EV) d'une première phase d'ouverture (EÖ1, ES1) se situe avant l'instant de fermeture (AS) de la soupape d'échappement (AV),
au moins une autre phase d'ouverture (EÖ2, ES2) de la soupape d'admission (EV) a lieu dans une alternance de charge dans le cylindre (ZY),
cette autre phase d'ouverture (EÖ2, ES2) étant temporairement interrompue par la première phase d'ouverture (EÖ1, ES1),
et le début de l'autre phase d'ouverture (EÖ2) se situe avant le point mort inférieur (UT), alors que la fin de l'autre phase d'ouverture (ES2) se situe après le point mort inférieur (UT).

2. Procédé selon la revendication 1,
**caractérisé en ce que**
on ferme toutes les soupapes d'échappement (AV) avant la fin (ES1) de la première phase de l'ouverture de soupape d'admission, mais avant le point mort supérieur (UT).

3. Procédé selon la revendication 1,
**caractérisé en ce que**
on choisit le début (EÔ2) de la seconde phase de l'ouverture de soupape d'admission après la fin (ES1) de la première phase de sorte qu'une dépression si grande se constitue dans le cylindre (ZY) qu'une vitesse d'admission élevée souhaitée pour le mélange gazeux apparaît dans le cylindre (ZY).

4. Procédé selon la revendication 1,
**caractérisé en ce que**
lors d'un fonctionnement du moteur à 6 temps ou à 8 temps, la seconde phase de l'ouverture de soupape d'admission décalée d'au moins environ une rotation de vilebrequin commence après la première phase de l'ouverture de soupape d'admission.

5. Procédé selon la revendication 1,
**caractérisé en ce qu'**
on commande individuellement la course, la raideur de flanc, le gradient d'ouverture et l'instant d'ouverture de toutes les soupapes d'admission (EV) et les soupapes d'échappement (AV)

6. Procédé selon l'une quelconque des revendications précédentes,
**caractérisé en ce que**
le début (AÖ, EÖ1, EÖ2) et la fin (AS, ES1, ES2) des phases d'ouverture et/ou les courses et/ou les raideurs de flancs des gradients d'ouverture pour les soupapes d'admission (EV) et les soupapes d'échappement (AV) sont choisis pour avoir les quantités spécifiques souhaitées de gaz frais et de gaz résiduel présentes après la fin du processus d'alternance de charge dans le cylindre, et à l'intérieur de chambre de combustion une forme et une force souhaitées du flux et de la turbulence de la charge du cylindre

7. Procédé selon l'une quelconque des revendications précédentes,
**caractérisé en ce que**
le début (AÖ, EÖ1, EÖ2) et la fin (AS, ES1, ES2) des phases d'ouverture et/ou les courses et/ou les raideurs de flancs des gradients d'ouverture pour les soupapes d'admission (EV) et les soupapes d'échappement (AV) sont commandés selon les critères d'une qualité optimale de formation du mélange et de gaz d'échappement, d'une dépense d'énergie minimale possible de placement des soupapes (AV, EV), d'évacuation et de réaspiration de gaz résiduel, et pour une consommation de carburant minimale possible.
